# EUROPÄISCHE PATENTSCHRIFT

(11) **EP 1 923 420 B1**
(45) Veröffentlichungstag und Bekanntmachung des Hinweises auf die Patenterteilung: **25.02.2009**
(21) Anmeldenummer: 06124036.2
(22) Anmeldetag: 14.11.2006
(51) Int. Cl.: C08J 5/04, B29C 70/08, B32B 5/02

(54) **Faserverbund-Werkstoff und Verfahren zu dessen Herstellung**
Fiber reinforced composite material and method for production thereof
Materiau composite renforce par des fibres et procede de production de celui-ci

(43) Veröffentlichungstag der Anmeldung: 21.05.2008
(73) Patentinhaber: Bond Laminates Gmbh, 59929 Brilon (DE)
(72) Erfinder: Bauder, Jochen, 59929 Brilon (DE); Obermann, Christian, 33181 Bad Wünnenberg (DE)
(74) Vertreter: Schmidt, Frank-Michael

(56) Entgegenhaltungen:
- DE-A1- 19 932 274
- US-A- 3 993 828
- US-A- 4 400 425

## Beschreibung

Die Erfindung betrifft einen Faserverbund-Werkstoff mit neuartigem Aufbau bzw. neuartiger Struktur und ein Verfahren zu seiner Herstellung. Insbesondere betrifft die Erfindung einen Faserverbund-Werkstoff mit einer Matrix aus Kunststoff, in welche Verstärkungsfasern eingebettet und über eine Faser-Matrix-Haftung mit der Matrix gekoppelt sind.

Faserverstärkte Kunststoffe sind in der Technik als Konstruktionswerkstoffe von zunehmender Bedeutung. Solche Faserverbund-Werkstoffe bestehen aus einer Vielzahl von Verstärkungsfasern, die in einer Matrix eingebettet sind. Derartige Faserverbund-Werkstoffe bieten vielfältige Vorteile gegenüber herkömmlichen Materialien, z.B. eine hohe, an Belastungsrichtung und Belastungsart anpassbare Festigkeit und Steifigkeit bei gleichzeitig niedriger Dichte, gute Alterungs- und Korrosionsbeständigkeit, viele Kombinationsmöglichkeiten von Fasern und Matrix-Materialien und hoch integrative Gestaltungsmöglichkeiten. Insbesondere im Bereich der Fortbewegungsmittel, wie z.B. Luftfahrt oder Kraftfahrzeugen gewinnen Faserverbund-Werkstoffe zunehmend aufgrund dieser Vorteile an Bedeutung.

Größte Bedeutung kommt bei der Herstellung von Faserverbund-Werkstoffen der Verbindung von Fasern und Matrix und insbesondere der Haftung zwischen diesen Komponenten zu. Um die Faser-Matrix-Haftung hinsichtlich ihrer Stärke zu beeinflussen und zu optimieren, werden Verstärkungsfasern meist vorbehandelt, um die geringe chemische Ähnlichkeit zwischen Fasern und umgebenen Matrix (z.B. Kunststoff) auszugleichen. Dazu werden der sogenannten Schlichte, welche während der Herstellung auf die Faser aufgebracht wird und die zur Weiterverarbeitung (Weben, Legen, Nähen) der Fasern notwendig ist, regelmäßig Haftvermittler zugesetzt. Ist die Schlichte oder der aufgebrachte Haftvermittler für die spätere Bestimmung nicht geeignet, muss diese Schlichte nach dem Webprozess wieder von der Faser herunter gebrannt werden und in einem separaten Arbeitsschritt ein passender Haftvermittler aufgebracht werden. Die entsprechend aufgebrachten Stoffe bilden auf einer Faseroberfläche eine Schicht, weswegen auch von einer Grenzschicht zwischen Faser und Matrix gesprochen wird. Es ist bekannt, dass eine Vielzahl unterschiedlicher Haftvermittler zur Verfügung steht, wobei je nach Matrixmaterial und Fasermaterial ein geeigneter Vermittler oder eine geeignete Mischung von Haftvermittlern auszuwählen ist.

Die Fasern sind eigentlicher Träger der Festigkeit und Steifigkeit und ihre Anordnung bestimmt die mechanischen Eigenschaften des Faserverbund-Werkstoffs. Die Matrix dient in erster Linie zum Einleiten der aufzunehmenden Kräfte in die einzelnen Fasern und zum räumlichen Halten der Fasern in einer gewünschten Raumform.

Faserverbund-Werkstoffe sind in der Lage, im Belastungsfall große Energiemengen bzw. Kräfte aufzunehmen, bevor es zum totalen Versagensfall kommt. Als totaler Versagensfall ist in diesem Zusammenhang zu verstehen, dass ein aus dem Faserverbund-Werkstoff gefertigtes Element bzw. Bauteil in mehrere Fragmenten zerlegt wird. Ein Problem besteht darin, dass bei Eintritt des totalen Versagensfalls der Faserverbund-Werkstoff regelmäßig einen Sprödbruch erleidet und die damit verbundenen Folgen, wie z.B. herumvagabundierende Bauteilfetzen, inakzeptable und unzulässige Risiken bergen, insbesondere wenn ein solches Bauteil in einem Personenfahrzeug verbaut ist.

Aufgabe der Erfindung ist es daher, einen Werkstoff zur Verfügung zu stellen, der in einem weiten Belastungsbereich die bekannten Vorteile eines Faserverbund-Werkstoffs bietet, ohne jedoch dessen Nachteile im totalen Versagensfall aufzuweisen.

Diese Aufgabe wird erfindungsgemäß durch einen Faserverbund-Werkstoff mit den Merkmalen des Patentanspruchs 1, sowie ein Verfahren zur Herstellung eines Faserverbund-Werkstoffs mit den Merkmalen des Patentanspruchs 5 gelöst.

Erfindungsgemäß sind bei dem Faserverbund-Werkstoff Verstärkungsfasern in eine Matrix aus Kunststoff eingebettet. Eine erste Gruppe der Verstärkungsfasern ist über eine erste Faser-Matrix-Haftung mit der Matrix gekoppelt. Eine zweite Gruppe von Verstärkungsfasern ist über eine zweite Faser-Matrix-Haftung mit der Matrix gekoppelt, wobei die zweite Faser-Matrix-Haftung geringer als die erste Faser-Matrix-Haftung ist.

Der Begriff "geringere Faser-Matrix-Haftung" bedeutet, dass die Faser-Matrix-Haftung der zweiten Gruppe von Fasern gezielt weniger stark ausgebildet ist als die der ersten Gruppe. Es wird dabei auf eine experimentell bestimmbare mittlere Haftung der Fasern and der Matrix Bezug genommen. Schwankungen um einen mittleren Haftungswert kommen für einzelne Fasern bei jeder Kopplung in einem Faserverbund-Werkstoff vor. Erfindungsgemäß wird jedoch die gesamte zweite Gruppe signifikant schwächer an die Matrix gekoppelt. In welchem Maß die Faser-Matrix-Haftung der zweiten Gruppe geringer ausgebildet wird hängt von den erwünschten Eigenschaften des resultierenden Werkstoffs ab. Beispielsweise kann die Haftung der Fasern der zweiten Gruppe im Mittel 5%-60% geringer ausgebildet sein als die der ersten Gruppe. Jedoch sind für besondere erwünschte Eigenschaften auch geringere oder stärkere Abweichungen möglich.

Für einen erfindungsgemäßen Faserverbund-Werkstoff kommen als Matrixmaterialien beliebige Thermoplaste, wie. z.B. Polyamide und Polypropylen in Frage.

Als Verstärkungsfasern kommen ebenfalls beliebige Arten in Frage, insbesondere bekannte Arten wie z.B. Glasfasern, Aramidfasern, Kohlenstoff-Fasern und deren sämtliche Formen, z.B. als Garne, Zwirne, Rovings, Matten, Vliese, Gewebe, Gelege oder Gewirke.

Während im Stand der Technik angestrebt wird, dem Werkstoff eine maximale Festigkeit zu verleihen und daher eine bestmögliche Haftung zwischen Fasern und Matrix zu gewährleisten, wird erfindungsgemäß bewusst die Faser-Matrix-Haftung eines Teils der Verstärkungsfasern geschwächt.

Die Faser-Matrix-Haftung eines Teils der Verstärkungsfasern im erfindungsgemäßen Faserverbund-Werkstoff (die zweite Gruppe von Verstärkungsfasern) ist gezielt derart behandelt oder ausgewählt, dass die Faser-Matrix-Haftung nicht optimiert, sondern gezielt geschwächt ist. Dies kann z.B. durch eine Konzentrationsvariation eines Haftvermittlers oder eine sonstige Störung oder Veränderung der Grenzschicht erfolgen. Ebenfalls möglich ist eine Auswahl einer handelsüblichen Schlichte bzw. Haftvermittlers, von welchem die geringe Affinität zum jeweils eingesetzten Matrixwerkstoff bekannt ist, oder durch Einsatz einer komplett entschlichteten Faser.

Ein anderer Teil der Fasern (die erste Gruppe von Verstärkungsfasern) ist demgegenüber derart ausgebildet und behandelt, dass eine optimierte Faser-Matrix-Haftung erreicht wird, z.B. durch optimierte Konzentration des Haftvermittlers oder einen anderen gewählten Haftvermittler oder eine sonstige Beeinflussung der Grenzschicht.

Da in dem Faserverbund-Werkstoff dementsprechend Fasern mit gezielt unterschiedlicher Faser-Matrix-Haftung vorliegen, und damit Schubspannungen auch nicht gleichmäßig übertragen werden, erfolgt auch eine unterschiedliche Krafteinleitung und Energieaufnahme in die unterschiedlichen Gruppen von Fasern. Es wird dabei ggf. in Kauf genommen, dass die Steifigkeit und Festigkeit in geringen Grenzen vermindert werden. Hingegen wird die gesamte mögliche Energieaufnahme des Faserverbund-Werkstoffs bis zum totalen Versagensfall regelmäßig gegenüber Faserverbund-Werkstoff mit ausschließlich optimierter Faser-Matrix-Haftung sogar erhöht, was beispielsweise im Zusammenhang mit potentiell Crash-gefährdeten Bauteilen in Fahrzeugen äußerst positiv ist. Erreicht wird durch den erfindungsgemäßen Faserverbund-Werkstoff, dass im totalen Versagensfall bereits eine verringerte Krafteinleitung in die Fasern der zweiten Gruppe erfolgt, während die Fasern der ersten Gruppe noch vollständig an die Matrix gekoppelt sind. Auch wenn die stärker gekoppelten Fasern einen Sprödbruch erleiden, verhindern die Fasern der zweiten Gruppe einen vollständigen Sprödbruch. Insgesamt ergibt sich ein Bruchverhalten, welches sonst nur bei anderen Materialien, wie z.B. Metallen bekannt ist, da kein Sprödbuch mehr auftritt, sondern es zu einem quasi-duktilen-Bruch kommt.

Der Anteil und die Gewichtung der Fasern und Faser-Matrix-Haftungen kann so gewählt werden, dass weiterhin eine überlegene Festigkeit des Werkstoffs gegenüber herkömmlichen Materialien gewährleistet ist, während jedoch das Verhalten im Versagensfall optimiert ist.

Die Matrix des Faserverbund-Werkstoffs ist aus einem thermoplastischen Kunststoff gebildet.

Faserverstärkte Werkstoffe mit Thermoplasten als Matrix bieten hervorragende Möglichkeiten der Weiterverarbeitung. Für die Weiterverarbeitung werden verstärkte Thermoplaste über die Schmelztemperatur erwärmt, umgeformt und anschließend abgekühlt. Die Weiterverarbeitung ist dementsprechend flexibler zu handhaben als bei Faserverbund-Werkstoffen mit einer duroplastischen Matrix.

Die Gruppen von Verstärkungsfasern sind jeweils als separate Lagen in dem Faserverbund-Werkstoff angeordnet.

Die Lagen sind üblicherweise durch Lagen von Matrixmaterial getrennt und können beliebig ausgebildet sein, z.B. als Gewebe, Matten, Vliese, Gelege oder Gewirke.

Derartig gebildete flächige Laminate bestehen aus schichtweise aufgebauten Verbunden aus flächigen Verstärkungslagen und Lagen der diese vollständig benetzenden und zusammenhaltenden Matrix. Die Verstärkungslagen werden beim Herstellungsprozess (Laminieren) vollständig miteinander verbunden. Derartige Faserverbund-Werkstoff-Matten bieten optimierte Festigkeit und Steifigkeit in der Faser-Richtung und können besonders vorteilhaft weiterverarbeitet werden. Die Herstellung derartiger Halbzeuge ist sowohl in kontinuierlichen, als auch in semikontinuierlichen oder diskontinuierlichen Prozessen möglich.

Die den äußeren Oberflächen des Werkstoffs nächsten Lagen sind aus Verstärkungsfasern der ersten Gruppe gebildet.

In oberflächennahen Bereichen weist der erfindungsgemäße Faserverbund-Werkstoff Faserschichten mit optimierter (großer) Faser-Matrix-Haftung (bzw. Faser-Matrix-Kopplung) auf. Insbesondere die Kopplung dieser Schichten bzw. Haftvermittler an das Matrixmaterial gewährleistet eine hohe Festigkeit und Steifigkeit des gesamten Materials. Auf diese Weise weist der Werkstoff optimierte Eigenschaften insbesondere hinsichtlich seiner Steifigkeit bzw. des Flächen-Trägheitsmomentes auf. Die Faser-Matrix Haftung ist in den äußeren Lagen optimiert, während die inneren Lagen, die für das Flächen-Trägheitsmoment von untergeordneter Bedeutung sind, das optimierte Bruchverhalten gewährleisten. Zwischen äußeren, haftungsoptimierten Lagen können in beliebiger Abfolge weitere Lagen von Verstärkungsfasern aus den verschiedenen Gruppen von Verstärkungsfasern angeordnet werden. Dabei werden die weiter zu den Oberflächen des Werkstoffs liegenden zweiten, dritten Lagen jedoch regelmäßig aus Verstärkungsfasern der ersten Gruppe (stark gekoppelt) gebildet sein, während eine oder mehrere "Kernlagen" aus Fasern der zweiten Gruppe (schwach gekoppelt) bestehen. Erfindungsgemäß ist es also möglich, dass sich im Inneren des Materials Lagen der verschiedenen Gruppen von Verstärkungsfasern abwechseln oder in sonstiger beliebiger Weise angeordnet sind.

Die erste und die zweite Gruppe von Verstärkungsfasern weisen eine einzige Art von Verstärkungsfasern auf.

Die Gruppen von Verstärkungsfasern unterscheiden sich dann ausschließlich in der Faser-Matrix-Haftung, also der Grenzschicht zwischen Verstärkungsfaser und Matrix, nicht jedoch in der Art der Fasern. Die Fasern an sich können einem identischen Herstellungsverfahren oder einer einzigen Charge entnommen sein, sie sind jedoch vor dem Einbetten in das Matrixmaterial unterschiedlich vorbereitet worden oder werden beim Imprägnieren der Fasern unterschiedlich behandelt.

In weiteren Ausbildungsformen der Erfindung ist vorgesehen, dass weitere Gruppen von Verstärkungsfasern über weitere, abweichende Faser-Matrix-Haftungen mit der Matrix gekoppelt sind.

Werden drei oder mehr Gruppen von Verstärkungsfasern mit unterschiedlichen Faser-Matrix-Haftungen verwendet, kann das Verhalten des Faserverbund-Werkstoffs weiter gezielt und höchst individuell beeinflusst werden. Dabei können jeweils unterschiedliche Faserarten oder gleiche Faserarten verwendet werden.

Vorzugsweise sind die Gruppen von Verstärkungsfasern jeweils mit verschiedenen Haftvermittler-Kompositionen versehen, welche die verschiedenen Faser-Matrix-Haftungen bewirken. Die unterschiedlichen Kompositionen können sich ausschließlich in den Konzentrationen unterscheiden oder auch andere Zusammensetzungen aufweisen. Wesentlich ist, dass durch die unterschiedlichen Haftvermittler-Kompositionen signifikant verschiedene Faser-Matrix-Haftungen eingestellt werden.

Bereits bei der Herstellung der Verstärkungsfasern kann der Haftvermittler als Teil der Schlichte aufgebracht werden. Es kann jedoch auch ein zusätzlicher Vorgang des thermischen Entschlichtens oder sonstiger Entschlichtung vorgesehen sein, der die bereits aufgebrachte Schlichte zerstört oder entfernt. Anschließend kann dann die Verstärkungsfaser mit einem Finish beschichtet werden, die den Haftvermittler enthält und auf die jeweilige Matrix und die gewünschte Faser-Matrix-Haftung abgestimmt ist. Alternativ können auch Kunststoffschichten verwendet werden. Beispielsweise können bei dem erfindungsgemäßen Faserverbund-Werkstoff Haftvermittler verwendet werden, die vernetzungsfähige Polyetherurethan- und Polyesterurethan-Polymere enthalten, welche als Filmbildner wirken, zusammen mit einem Aminosilan-Haftvermittler.

Eine entsprechend eingesetzte Kunststoffschicht kann z.B. 5-10 % Silan, 80-90 % polymere Filmbildner und 5-10 % sonstige Hilfsmittel enthalten. Um unterschiedliche Faser-Matrix-Haftungen zu erzielen, werden die Anteile der Kunststoffschicht variiert. Alternativ werden Verstärkungsfasern oder z.B. deren Gewebe thermisch entschlichtet und ein Finish mit Silan wird durchgeführt, wobei eine unterschiedliche Faser-Matrix-Haftung eingestellt wird, indem beispielsweise die Hitzeeinwirkung beim Entschlichten auf unterschiedliche Temperaturen für die verschiedenen Gruppen von Faserverbund-Werkstoffen gewählt wird (z.B. 450°C einerseits und 500°C andererseits). Auf diese Weise werden die haftvermittelnden Komponenten unterschiedlich stark entfernt und es resultiert für die beiden Gruppen von Verstärkungsfasern eine unterschiedliche Faser-Matrix-Haftung.

Beliebige Variationen der Möglichkeiten, verschiedene Faser-Matrix-Haftungen einzustellen sind möglich. So können z.B. auch bei der Herstellung mit Kunststoffschichten behandelte Verstärkungsfasern oder Rovings z.B. für die zweite Gruppe von Verstärkungsfasern eingesetzt werden, während für die erste Gruppe von Verstärkungsfasern ein Verstärkungsfaser-Gewebe entschlichtet wird und ein Finish mit Silan aufgebracht wird, um eine optimale Faser-Matrix-Haftung zu erzielen.

Das erfindungsgemäße Herstellungsverfahren umfasst die bei der Herstellung von Verbundwerkstoffen üblichen Phasen der Imprägnierung, Konsolidierung und Solidifikation, wobei der Prozess über Temperatur, Druck und Zeit beeinflusst wird. Bei der Imprägnierung wird die Matrix in einen fließfähigen Zustand überführt und benetzt die Verstärkungsfasern unter Ausbildung einer Grenzschicht. Bei der Konsolidierung werden Lufteinschlüsse vermindert und eine gute Verbindung zwischen Verstärkungslagen hergestellt. Ziel ist es, nach Imprägnierung und Konsolidierung einen porenfreien Materialverbund zu erhalten. Die unter Wärmeentzug stattfindende Solidifikation führt anschließend zu einem gebrauchsfertigen Werkstoff.

Bei dem erfindungsgemäßen Herstellungsverfahren ist es besonders vorteilhaft, wenn die verschiedenen Lagen von Verstärkungsfasern in einem einzigen Verarbeitungsschritt mit dem Matrixmaterial imprägniert und konsolidiert werden. Die Herstellung des Faserverbund-Werkstoffs erfolgt auf diese Weise in besonders effizienter Art.

Alternativ können die genannten Schritte in getrennter Abfolge ausgeführt werden. Beispielsweise können zunächst Lagen mit unterschiedlich vorbereiteten Verstärkungsfasern vorbereitet werden, wobei eine Imprägnierung der Fasern mit dem Matrixmaterial stattfindet. Danach liegen imprägnierte Lagen mit Fasern mit unterschiedlicher Faser-Matrix Haftung vor, die in einem weiteren Arbeitsschritt zu einem Materialverbund konsolidiert werden.

Bevor die Faserverbund-Lagen mit dem Matrixmaterial laminiert werden, wird vorzugsweise wenigstens eine der Gruppe von Verstärkungsfasern einer Vorbehandlung unterzogen, in deren Verlauf die spätere Faser-Matrix-Haftung beeinflusst wird.

Die Vorbehandlung kann beispielsweise einen Beschichtungsschritt, einen Ätzschritt, einen Wärmebehandlungsschritt oder einen mechanischen Oberflächenbehandlungsschritt enthalten. Insbesondere kann z.B. durch Erhitzen einer Gruppe von Verstärkungsfasern ein bereits aufgebrachter Haftvermittler teilweise entfernt werden.

Weitere bevorzugte Ausführungsformen der Erfindung sind in den Ansprüchen angegeben.

Die Erfindung wird nun anhand eines Ausführungsbeispiels und der beiliegenden Zeichnung näher erläutert.

Figur 1 zeigt eine schematische Ansicht eines Schichtaufbaus eines erfindungsgemäßen Faserverbund-Werkstoffs.

Figur 2 zeigt ein Ausführungsbeispiel des erfindungsgemäßen Herstellungsverfahrens für einen Faserverbund-Werkstoff.

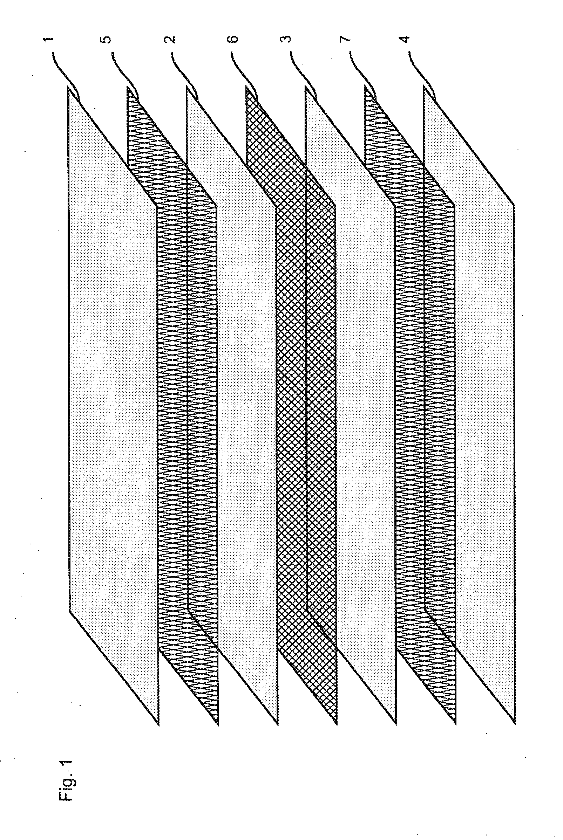

Gemäß einem in Figur 1 gezeigten Ausführungsbeispiel weist der Faserverbund-Werkstoff eine Mehrzahl von Lagen auf. Bei den Lagen wechseln sich Lagen 1, 2, 3, 4 aus Matrixmaterial mit Lagen 5, 6, 7 aus textilen Halbzeugen von Verstärkungsfasern ab. Die Lagen 1, 2, 3, 4 sind aus einer Polyamidfolie gebildet. Die Lagen 5 und 7 bestehen aus Glasfasern, auf die vor der Einbringung in den Werkstoff mit Haftvermittlern aus Aminosilanen oder Vinylsilanen versehen wurden. Die Haftvermittlung zwischen der Lage 5 und den umgebenden Matrixlagen 1, 2 bzw. der Lage 7 und der umgebenden Lagen 3 und 4 ist hinsichtlich der Faser-Matrix-Haftung optimiert. Dies bedeutet, dass eine bestmögliche Haftung der Fasern an dem Matrixmaterial angestrebt ist und dementsprechend eine optimierte Haftvermittlerkomposition verwendet ist.

Die Faser-Matrix-Haftung der Lage 6 an die Matrixlagen 2, 3 ist geringer ausgebildet. Dazu weist die Faser-Lage 6 eine andere Haftvermittlerkomposition auf, welche weniger auf die möglichst hohe Faser-Matrix-Haftung optimiert ist. Auf die entsprechende Lage 6 ist vor der Einbringung in den Werkstoff ein Haftvermittler aus mit Maleinsäureanhydrid (MSA) modifizierten PP-Polymeren aufgebracht ist. Demnach weist der Werkstoff Lagen mit optimierter Faser-Matrix-Haftung und Lagen suboptimaler Faser-Matrix-Haftung auf.

Bei dem Ausführungsbeispiel ist die Faser-Matrix-Haftung der Lage 6 zu den umgebenden Matrixlagen 2, 3 derart ausgebildet, dass bei experimentellen Zugbelastungstests weiterhin eine Belastbarkeit gewährleistet ist, welche dem späteren Einsatzbereich angepasst ist. Wird der Faserverbund-Werkstoff beispielsweise für die Fahrzeugindustrie benötigt, ist eine Dauerbelastbarkeit über den gesamten theoretisch möglichen zu erwartenden Belastungsbereich gewährleistet. Im Bereich der Versagensbelastung kommt es jedoch zu einer verminderten Einleitung der Kräfte aus den umgebenden Matrixlagen 2, 3 in die Faser-Lage 6, während hingegen die Faser-Matrix-Haftung zwischen den Lagen 5 und 7 und der umgebenden Matrix weiterhin eine hohe Krafteinleitung gewährleistet. Dadurch bildet der Faserverbund-Werkstoff ein modifiziertes Versagensverhalten aus, wobei er ein quasi-duktiles-Bruchverhalten zeigt. Auf diese Weise ist eine hoch flexible Anpassung der Eigenschaften des Faserverbund-Werkstoffs an den Anwendungsbereich möglich, sogenannte versagensmodifizierte oder crashmodifizierte Werkstoffe sind herstellbar. Es ist dem Fachmann dabei klar, dass eine tatsächliche Quantifizierung der unterschiedlichen Ausbildung der Faser-Matrix-Haftung kaum möglich ist, da im Bereich der Faserverbund-Werkstoff-Herstellung in erster Linie auf empirische Daten und Optimierungen zurückgegriffen wird. Eine gemäß den Ansprüchen optimiertes Bruchverhalten ist für den Fachmann jedoch im Rahmen der Erfindung ohne weiteres in einer begrenzten Anzahl von Versuchen möglich.

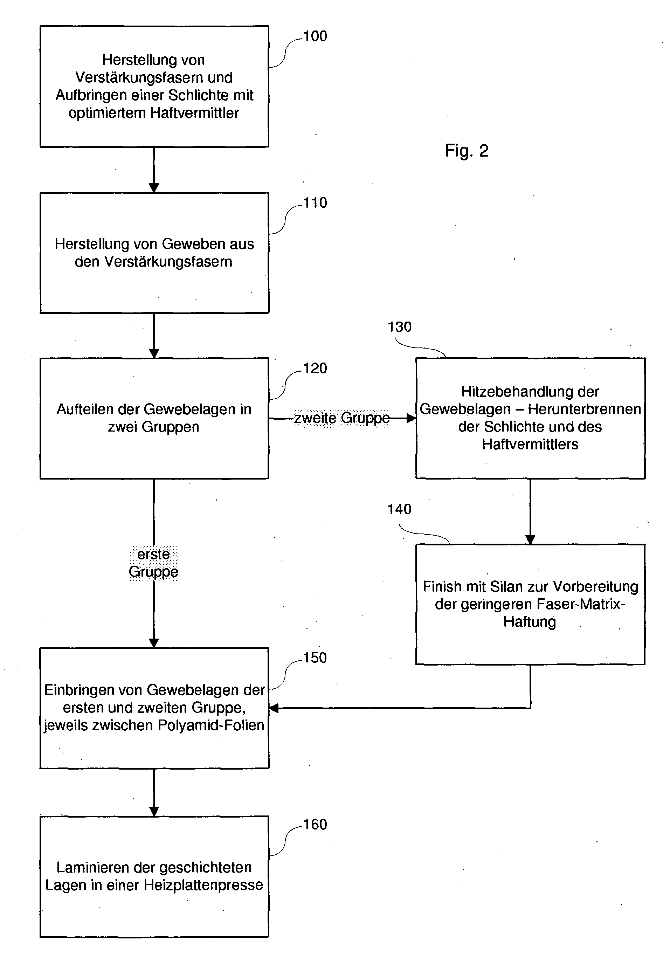

Figur 2 zeigt in schematischer Weise einen möglichen Ablauf des erfindungsgemäßen Verfahrens. Bei Schritt 100 wird vor Durchführung des erfindungsgemäßen Verfahrens eine Vielzahl von Verstärkungsfasern hergestellt und eine Schlichte mit einem für die zukünftig verwendete Matrix optimierten Haftvermittler wird unmittelbar nach Herstellung der Fasern aufgebracht. In Schritt 110 wird aus den mit Schlichte und Haftvermittler versehenen Fasern ein textiles Halbzeug, z.B. ein Gewebe, Gelege etc. hergestellt. Das textile Halbzeug wird zu Lagen in gewünschter Größe geschnitten.

In Schritt 120 werden die Faser-Lagen in zwei Gruppen aufgeteilt, die jeweils eine unterschiedliche Anzahl von Lagen umfassen können. Die erste Gruppe verbleibt in der bestehenden Form, demnach mit optimiertem Haftvermittler versehen. Die zweite Gruppe wird in Schritt 130 einer Hitzebehandlung unterzogen. Die Lagen des textilen Halbzeugs können dazu z.B. durch einen Rollofen gefördert werden. Dabei wird die auf die Oberfläche der Fasern aufgebrachte Schlichte und der aufgebrachte Haftvermittler heruntergebrannt oder zumindest teilweise entfernt. Bei Schritt 140 werden die hitzebehandelten Lagen des textilen Halbzeugs schließlich mit einem Finish mit Silan versehen, um eine Haftvermittlung der zweiten Gruppe von Lagen des textilen Halbzeugs vorzubereiten, jedoch mit geringerer Faser-Matrix-Haftung. In Schritt 150 werden schließlich die beiden Gruppen von Lagen des textilen Halbzeugs wieder zusammengeführt und in einer vorbestimmten Abfolge zwischen Lagen aus Matrixmaterial, in diesem Fall Polyamid-Folien gebracht. In Schritt 160 werden schließlich die geschichteten Lagen in einer Heizplattenpresse laminiert, wobei bei hohem Druck und Temperatur das Matrixmaterial die Faser-Lagen imprägniert. Bei diesem Vorgang wird zwischen dem Matrixmaterial und der ersten Gruppe von Verstärkungsfasern einerseits und Matrixmaterial und der zweiten Gruppe von Verstärkungsfasern andererseits eine unterschiedliche Faser-Matrix-Haftung ausgebildet, gemäß der Vorbereitung der unterschiedlichen Gruppen.

Die Erfindung kann ohne weiteres auch auf kontinuierliche oder quasi-kontinuierliche Herstellungsprozesse angewandt werden. Insbesondere ist die Art, wie die unterschiedlichen Gruppen von Verstärkungsfasern vorbereitet oder ausgewählt werden, beliebig, solange eine unterschiedliche Faser-Matrix-Haftung herstellbar ist. Beispielsweise können auch textile Halbzeuge verwendet werden, die bereits bei der Herstellung mit unterschiedlichen Schlichten vorbehandelt wurden. Grundsätzlich ist es auch möglich, innerhalb einer Lage Fasern mit unterschiedlicher Haftung zu verwenden. In diesem Fall wären Lagen aus Fasern mit unterschiedlicher Oberflächenbehandlung oder Fasern unterschiedlicher Art zu verwenden.

Weiterhin ist in dem Ausführungsbeispiel der Aufbau eines Faserverbund-Werkstoffs mittels sog. Film-Stacking dargestellt. Dabei wird mit Faserlagen und zwischen gebrachten Kunststofffolien gearbeitet. Es sind aber im Rahmen der Erfindung zahlreiche andere denkbare Einbringungen des Kunststoffes in die Faser möglich, z.B. über Pulverbeschichtung, Lösemittelverfahren, Schmelzebeschichtung usw.

## Patentansprüche

1. Faserverbund-Werkstoff mit einer Matrix aus einem thermoplastischen Kunststoff, in die Lagen von Verstärkungsfasern eingebettet sind, wobei eine erste Gruppe von Verstärkungsfasern einer ersten Art über eine erste Faser-Matrix-Haftung mit der Matrix gekoppelt ist,
**dadurch gekennzeichnet, dass**
eine zweite Gruppe von Verstärkungsfasern der ersten Art über eine zweite Faser-Matrix-Haftung mit der Matrix gekoppelt ist, wobei die Gruppen von Verstärkungsfasern jeweils mit verschiedenen Haftvermittler-Kompositionen versehen sind, welche die verschiedenen Faser-Matrix-Haftungen bewirken,
die zweite Faser-Matrix-Haftung geringer ist als die erste Faser-Matrix-Haftung, und
die oberflächennahen Lagen von Verstärkungsfasern aus Verstärkungsfasern der ersten Gruppe mit größerer Faser-Matrix Haftung gebildet sind.

2. Faserverbund-Werkstoff nach Anspruch 1, **dadurch gekennzeichnet, dass** mehrere Lagen aus Verstärkungsfasern der zweiten Gruppe zwischen Lagen aus Verstärkungsfasern der ersten Gruppe angeordnet sind.

3. Faserverbund-Werkstoff nach einem der Ansprüche 1 bis 2, **dadurch gekennzeichnet, dass** wenigstens eine weitere Gruppe von Verstärkungsfasern über eine abweichende Faser-Matrix-Haftung mit der Matrix gekoppelt ist.

4. Faserverbund-Werkstoff nach einem der Ansprüche 1 bis 3, **dadurch gekennzeichnet, dass**
wenigstens ein Anteil der Verstärkungsfasern der ersten Gruppe mit ihrer Faserrichtung in einer ersten vorzugsrichtung in der Matrix eingebettet sind,
wenigstens ein Anteil der Verstärkungsfasern der zweiten Gruppe mit ihrer Faserrichtung in einer zweiten, abweichenden vorzugsrichtung in der Matrix eingebettet sind.

5. Herstellungsverfahren für einen Faserverbund-Werkstoff, umfassend die Schritte:
Imprägnieren einer ersten Gruppe von Verstärkungsfasern einer ersten Art mit einem thermoplastischen Matrixmaterial aus Kunststoff, wodurch die erste Gruppe von Verstärkungsfasern mit dem Matrixmaterial über eine erste Faser-Matrix-Haftung gekoppelt wird,
Imprägnieren einer zweiten Gruppe von Verstärkungsfasern der ersten Art mit dem thermoplastischen Matrixmaterial aus Kunststoff, wodurch die zweite Gruppe von Verstärkungsfasern mit dem Matrixmaterial über eine zweite Faser-Matrix-Haftung gekoppelt wird, wobei eine der Faser-Matrix-Haftungen geringer ausgebildet wird als die andere Faser-Matrix-Haftung, wobei die Verstärkungsfasern als Lagen in das Matrixmaterial laminiert werden,
konsolidieren des Materialverbundes mit den imprägnierten Gruppen von verstärkungsfasern, wobei die oberflächennahen Lagen von Verstärkungsfasern aus Fasern der ersten Gruppe gebildet werden, die eine größere Faser-Matrix Haftung aufweisen.

6. Verfahren nach Anspruch 5, wobei das Imprägnieren der ersten Gruppe von Verstärkungsfasern und der zweiten Gruppe von Verstärkungsfasern zeitgleich in einem Arbeitsschritt erfolgt.

7. Verfahren nach Anspruch 6, wobei das Imprägnieren der ersten Gruppe von Verstärkungsfasern und der zweiten Gruppe von verstärkungsfasern in separaten Arbeitsschritten erfolgt.

8. Verfahren nach einem der Ansprüche 6 oder 7, wobei das Konsolidieren zeitgleich mit einem Imprägnierschritt erfolgt.

9. Verfahren nach einem der Ansprüche 5 bis 8, wobei zunächst wenigstens eine der Gruppen von Verstärkungsfasern einer Vorbehandlung unterzogen wird, in deren Verlauf die spätere Faser-Matrix-Haftung beeinflusst wird.

10. Verfahren nach Anspruch 9, wobei die Vorbehandlung wenigstens einen Beschichtungsschritt oder einen Ätzschritt oder einen wärmebehandlungsschritt oder einen mechanischen Oberflächenbehandlungsschritt oder einen Plasmalaehandlungsschritt enthält.

11. Verfahren nach einem der Ansprüche 9 oder 10, wobei während der Vorbehandlung eine Haftvermittler-Komposition auf die Verstärkungsfaser aufgebracht wird.

12. verfahren nach Anspruch 11, wobei die Vorbehandlung ein Aufbringen einer einen Haftvermittler enthaltenden Schlichte umfasst.

## Claims

1. Composite fibre material with a matrix of a thermoplastic plastics material in which layers of reinforcing fibres are embedded, wherein a first group of reinforcing fibres of a first type is coupled to the matrix by way of a first fibre/matrix bond, **characterised in that** a second group of reinforcing fibres of the first type is coupled to the matrix by way of a second fibre/matrix bond, wherein the groups of reinforcing fibres are each provided with different adhesion promoter compositions which bring about the different fibre/matrix bonds, the second fibre/matrix bond is slighter than the first fibre/matrix bond, and the layers of reinforcing fibres near the surface are formed from reinforcing fibres of the first group with a greater fibre/matrix bond.

2. Composite fibre material as claimed in Claim 1, **characterised in that** a plurality of layers of reinforcing fibres of the second group are disposed between layers of reinforcing fibres of the first group.

3. Composite fibre material as claimed in any one of Claims 1 to 2, **characterised in that** at least one further group of reinforcing fibres is coupled to the matrix by way of a different fibre/matrix bond.

4. Composite fibre material as claimed in any one of Claims 1 to 3, **characterised in that** at least a proportion of the reinforcing fibres of the first group are embedded in the matrix with their fibres directed in a first preferred direction, and at least a proportion of the reinforcing fibres o the second group are embedded in the matrix with their fibres directed in an a second, different preferred direction.

5. Method of production of a composite fibre material, comprising the steps of:
- impregnating a first group of reinforcing fibres of a first type with a thermoplastic matrix material made from plastics material, whereby the first group of reinforcing fibres is coupled to the matrix material by way of a first fibre/matrix bond,
- impregnating a second group of reinforcing fibres of the first type with the thermoplastic matrix material made from plastics material, whereby the second group of reinforcing fibres is coupled to the matrix material by way of a second fibre/matrix bond, wherein one of the fibre/matrix bonds is slighter than the other fibre/matrix bond, the reinforcing fibres being laminated into the matrix material as layers,
- consolidating the material composite with the impregnated groups of reinforcing fibres, wherein the layers of reinforcing fibres are formed from layers of the first group which have a greater fibre/matrix bond.

6. Method as claimed in Claim 5, wherein the impregnation of the first group of reinforcing fibres and of the second group of reinforcing fibres takes place simultaneously in one working step.

7. Method as claimed in Claim 6, wherein the impregnation of the first group of reinforcing fibres and of the second group of reinforcing fibres takes place in separate working steps.

8. Method as claimed in any one of Claims 6 or 7, wherein the consolidation takes place simultaneously with an impregnating step.

9. Method as claimed in any one of Claims 5 to 8, wherein first of all at least one of the groups of reinforcing fibres is subjected to a preliminary treatment, in the course of which the later fibre/matrix bond is influenced.

10. Method as claimed in Claim 9, wherein the preliminary treatment includes at least one coating step or an etching step or a heat treatment step or a mechanical surface treatment step or a plasma treatment step.

11. Method as claimed in any one of Claims 9 or 10, wherein during the preliminary treatment an adhesion promoter composition is applied to the reinforcing fibres.

12. Method as claimed in Claim 11, wherein the preliminary treatment comprises application of a wash containing an adhesion promoter.

## Revendications

1. Matériau de fibres composites comprenant une matrice constituée d'un matériau synthétique thermoplastique, dans laquelle sont enfouies des couches de fibres de renforcement, un premier groupe de fibres de renforcement d'un premier type étant couplé avec la matrice par le biais d'une première adhérence fibres-matrice, **caractérisé en ce que**
un second groupe de fibres de renforcement du premier type est couplé avec la matrice par le biais d'une seconde adhérence fibres-matrice, les groupes de fibres de renforcement étant respectivement pourvus de différentes compositions d'agent adhésif qui produisent les différentes adhérences fibres-matrice,
la seconde adhérence fibres-matrice est plus faible que la première adhérence fibres-matrice, et
les couches de fibres de renforcement à proximité de la surface sont constituées de fibres de renforcement du premier groupe présentant une adhérence fibres-matrice plus forte.

2. Matériau de fibres composites selon la revendication 1, **caractérisé en ce que** plusieurs couches de fibres de renforcement du second groupe sont agencées entre des couches de fibres de renforcement du premier groupe.

3. Matériau de fibres composites selon l'une quelconque des revendications 1 et 2, **caractérisé en ce qu'**au moins un autre groupe de fibres de renforcement est couplé avec la matrice par le biais d'une adhérence fibres-matrice différente.

4. Matériau de fibres composites selon l'une quelconque des revendications 1 à 3, **caractérisé en ce que**
au moins une partie des fibres de renforcement du premier groupe est enfouie dans la matrice, les fibres étant orientées selon une première direction préférée,
au moins une partie des fibres de renforcement du second groupe est enfouie dans la matrice, les fibres étant orientées selon une seconde direction préférée différente.

5. Procédé de fabrication pour un matériau de fibres composites, comprenant les étapes suivantes :
on imprègne un premier groupe de fibres de renforcement d'un premier type avec un matériau de matrice thermoplastique en matériau synthétique, ce qui provoque le couplage du premier groupe de fibres de renforcement avec le matériau de matrice par le biais d'une première adhérence fibres-matrice,
on imprègne un deuxième groupe de fibres de renforcement du premier type avec le matériau de matrice thermoplastique en matériau synthétique, ce qui provoque le couplage du second groupe de fibres de renforcement avec le matériau de matrice par le biais d'une seconde adhérence fibres-matrice, l'une des adhérences fibres-matrice étant réalisée de manière plus faible que l'autre adhérence fibres-matrice, dans lequel les fibres de renforcement sont laminées en couches dans le matériau de matrice,
on consolide le matériau composite contenant les groupes de fibres de renforcement imprégnés, dans lequel les couches de fibres de renforcement à proximité de la surface sont constituées de fibres du premier groupe, qui présentent une adhérence fibres-matrice plus forte.

6. Procédé selon la revendication 5, dans lequel l'imprégnation du premier groupe de fibres de renforcement et du second groupe de fibres de renforcement se fait en même temps en une seule étape opératoire.

7. Procédé selon la revendication 6, dans lequel l'imprégnation du premier groupe de fibres de renforcement et du second groupe de fibres de renforcement se fait dans le cadre d'étapes opératoires séparées.

8. Procédé selon l'une quelconque des revendications 6 ou 7, dans lequel la consolidation se fait en même temps qu'une étape d'imprégnation.

9. Procédé selon l'une quelconque des revendications 5 à 8, dans lequel au moins l'un des groupes de fibres de renforcement est d'abord soumis à un prétraitement, dont le déroulement exercera un effet sur l'adhérence fibres-matrice ultérieure.

10. Procédé selon la revendication 9, dans lequel le prétraitement contient au moins une étape de revêtement ou une étape de traitement corrosif ou une étape de traitement thermique ou une étape de traitement mécanique de surface ou une étape de traitement au plasma.

11. Procédé selon l'une quelconque des revendications 9 ou 10, dans lequel on applique, pendant le prétraitement, une composition d'agent adhésif sur les fibres de renforcement.

12. Procédé selon la revendication 11, dans lequel le prétraitement comprend une application d'un enduit contenant un agent adhésif.
